# EUROPÄISCHE PATENTANMELDUNG

(11) **EP 1 193 533 A2**
(43) Veröffentlichungstag der Anmeldung: **03.04.2002**
(21) Anmeldenummer: 01113329.5
(22) Anmeldetag: 31.05.2001
(51) Int. Cl.: G02C 1/02

(54) **Brille**

(30) Priorität: 31.05.2000 DE 10026874
(71) Anmelder: Optische Werke G. Rodenstock, 80469 München (DE)
(72) Erfinder: Kövani, Peter, 82049 Pullach (DE)
(74) Vertreter: Münich, Wilhelm, Dr.

(57) **Zusammenfassung**

Beschrieben wird eine Brille mit einer Brücke und Bügeln, die direkt, d.h. ohne Gläserringe mit den Brillengläsern verbunden sind.

Die Erfindung zeichnet sich dadurch aus, daß die Brücke und/oder die Bügel derart mit den Brillengläsern über Verbindungselemente verbunden sind, daß sie ohne Zerstörung der Brücke bzw. der Bügel nicht gelöst werden können.

## Beschreibung

### Technisches Gebiet

Die Erfindung bezieht sich auf eine Brille mit einer Brücke und Bügeln, die direkt, d.h. ohne Gläserringe mit den Brillengläsern verbunden sind.

Derartige Brillen werden unter anderem als Fertigbrillen und insbesondere als Lese-Brillen eingesetzt.

### Stand der Technik

Insbesondere bei Lese-Brillen gemäß dem Oberbegriff des Patentanspruchs 1 kommt es immer wieder vor, daß unfachmännisch Brillengläser anstelle der vom Hersteller ursprünglich eingesetzten Brillengläser eingesetzt werden.

Weiterhin weisen die bekannten Fertigbrillen den Nachteil auf, daß eine Einstellung der Pupillendistanz nicht möglich ist.

### Darstellung der Erfindung

Der Erfindung liegt die Aufgabe zugrunde, eine Brille gemäß dem Oberbegriff des Patentanspruchs 1, d. h. eine sogenannte Gläserring-lose Brille derart weiterzubilden, daß ein Austausch der Brillengläser nicht möglich ist und/oder daß die Pupillendistanz leicht anpaßbar ist.

Erfindungsgemäße Lösungen dieser Aufgabe sind in den unabhängigen Patentansprüchen angegeben.

Gemäß Patentanspruch 1 sind die Brücke und/oder die Bügel derart mit den Brillengläsern über Verbindungselemente verbunden sind, daß sie ohne Zerstörung der Brücke bzw. der Bügel nicht gelöst werden können. Dies kann insbesondere dadurch erreicht werden, daß die Verbindungselemente der Brücke und/oder der Bügel schwalbenschwanzförmig ausgebildet sind, und daß die Gläser komplementäre Ausnehmungen ausweisen. Die hierdurch gegebene formschlüssige Verbindung ist bereits schwer zu lösen, in der Regel kann dies nicht ohne Zerstörung der Verbindungselemente erfolgen. Das Lösen der Verbindung wird weiter erschwert, wenn die Verbindungselemente mit den Gläsern verklebt oder über Vorsprünge, Noppen oder dgl. verbunden sind.

Der erfindungsgemäße Aufbau kann prinzipiell bei den unterschiedlichsten Gläsern eingesetzt werden, besonders bevorzugt ist es jedoch, wenn die Gläser aus einem Thermoplast, wie Polycarbonat bestehen. Derartige Kunststoffmaterialien haben einen Aufbau, der der Festigkeit der Verbindung entgegenkommt.

Im übrigen kann die Brille in an sich bekannter Weise ausgebildet sein.

Erfindungsgemäß wird ferner eine Fertigbrillen geschaffen, bei der die Brücke derart ausgebildet ist, daß sie eine Einstellung der Pupillendistanz (PD) erlaubt.

### Kurze Beschreibung der Zeichnung

Die Erfindung wird nachstehend anhand von Ausführungsbeispielen unter Bezugnahme auf die Zeichnungen näher beschrieben, in der zeigen:
- Fig. 1a: eine Ansicht von vorne einer erfindungsgemäßen Brille,
- Fig. 1b: einen Schnitt bei A-A' in Fig. 1a,
- Fig. 1c: eine Aufsicht auf die Brille, und
- Fig. 2a - 2c: die in Fig. 1 dargestellte Brille mit unterschiedlichen Brücken zur Anpassung der Brille an unterschiedliche Pupillendistanzen.

### Darstellung von Ausführungsbeispielen

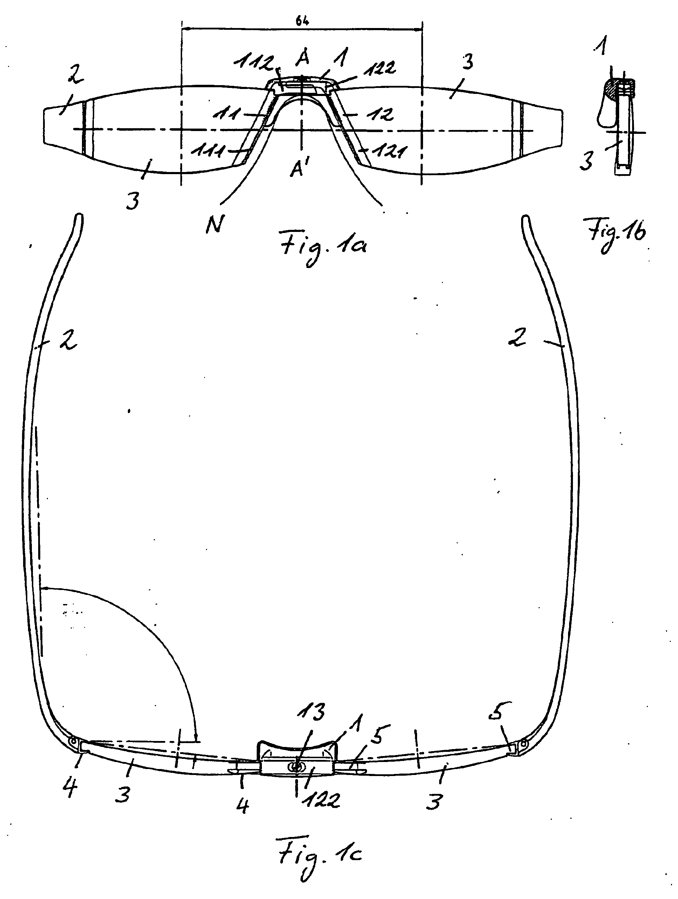

Fig. 1 zeigt eine erfindungsgemäße Brille, bei der ein Nasensattel 1, der auf einer nur schematisch dargestellten Nase N aufliegt, auf eine Brücke aufgerastet ist. Die Brücke weist zwei Teile 11 und 12 auf; jeder Teil 11 bzw. 12 weist einen Abschnitt 111 bzw. 121, der sich längs der Brillengläser 3 erstreckt, sowie einen Abschnitt 112 bzw. 122 auf, der sich in "Brückenrichtung" erstreckt. Die Abschnitte 112 und 122 greifen übereinander und sind mittels einer Schraube 13 lösbar miteinander verbunden. Zusätzlich kann einer der Abschnitte 112 bzw. 122 eine Führung für den jeweils anderen Abschnitt aufweisen.

Bei der erfindungsgemäßen Fertigbrillen sind die Bügel 2 direkt mit Brillengläsern 3 verbunden. Bei dem gezeigten Ausführungsbeispiel sind sowohl die Brücke als auch die Bügel 2 derart mit den Brillengläsern 3 verbunden, daß sie ohne Zerstörung der Brücke bzw. der Bügel 2 nicht gelöst werden können. Hierzu weisen die Brücke und die Bügel 2 schwalbenschwanzförmig ausgebildete Verbindungselemente 4 auf, die in komplementäre Ausnehmungen 5 eingreifen, die in den Gläsern 3 vorgesehen sind. Zusätzlich können die Anlageflächen der schwalbenschwanzförmig ausgebildeten Verbindungselemente 4 mit den entsprechenden Anlageflächen der komplementären Ausnehmungen 5 verklebt sein.

Im übrigen sind die Brücke 1 und die Scharniere der Bügel 2 in an sich bekannter Weise ausgebildet. Die Brillengläser 3 können aus jedem für Brillengläser bekannten Material bestehen, besonders bevorzugt ist jedoch die Verwendung von Thermoplasten, wie Polycarbonat. Diese Materialien haben eine Festigkeit, die besonders für gläserringlose Brillen geeignet ist.

Auch die Bügel 1 und die Brücke 2 können aus beliebigem Materialien und insbesondere aus einem Metall oder aus Kunststoffmaterialien bestehen.

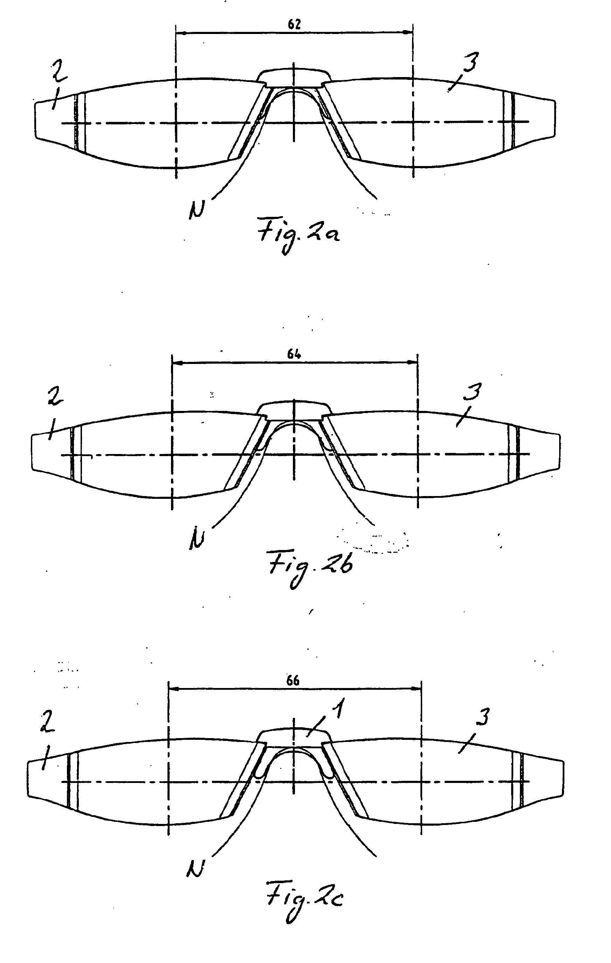

Da die Brücke bevorzugt aus mehreren Teilen besteht, ist durch die Einstellung unterschiedlicher Brückenbreiten die Anpassung der Brille an unterschiedliche Pupillendistanzen möglich ist. Dies ist in Fig. 2a bis 2c exemplarisch für die Pupillendistanzen 62 mm,64 und 66 mm dargestellt. Der Verlauf der Nase ist wiederum mit N bezeichnet. Die Anpassung an unterschiedliche Nasenformen kann durch die Verwendung unterschiedlicher, gegebenenfalls weich bzw. flexibel ausgebildeter Nasensättel erfolgen.

Vorstehend ist die Erfindung anhand von Ausführungsbeispielen ohne Beschränkung des allgemeinen Erfindungsgedankens beschrieben worden:

So kann die Verbindung zwischen den Brückenteilen bzw. den Bügeln und den Gläsern auch anders als dargestellt erfolgen.

Zur Breiteneinstellung der Brücke kann auch ein Steg vorgesehen werden, der an der gegebenenfalls mit Gläserringen versehenen Brillengläsern beidseits angeschraubt ist, so daß die Brückenbreite nach Lösen zweiter Schrauben eingestellt werden kann.

Auch können anstelle eines Nasensattels Seitenstege eingesetzt werden, die an den Brückenteilen 112 und 122 befestigt sind, und die Pads und insbesondere Softpads tragen, mit den die Brillen auf der Nase aufliegt.

## Patentansprüche

1. Brille mit einer Brücke und Bügeln, die direkt, d.h. ohne Gläserringe mit den Brillengläsern verbunden sind,
**dadurch gekennzeichnet, daß** die Brücke und/oder die Bügel derart mit den Brillengläsern über Verbindungselemente verbunden sind, daß sie ohne Zerstörung der Brücke bzw. der Bügel nicht gelöst werden können.

2. Brille nach Anspruch 1,
**dadurch gekennzeichnet, daß** die Verbindungselemente der Brücke und/oder der Bügel schwalbenschwanzförmig ausgebildet sind, und
daß die Gläser komplementäre Ausnehmungen ausweisen.

3. Brille nach Anspruch 1 oder 2,
**dadurch gekennzeichnet, daß** die Verbindungselemente mit den Gläsern verklebt oder über Vorsprünge, Noppen oder dgl. verbunden sind.

4. Brille nach einem der Ansprüche 1 bis 3,
**dadurch gekennzeichnet, daß** die Gläser aus einem Thermoplast, wie Polycarbonat bestehen.

5. Brille mit einer Brücke und Bügeln sowie gegebenenfalls Gläserringen für die Brillengläser oder nach einem der Ansprüche 1 bis 4,
**dadurch gekennzeichnet, daß** die Brücke derart ausgebildet ist, daß sie eine Einstellung der Pupillendistanz (PD) erlaubt.

6. Brille nach Anspruch 5,
**dadurch gekennzeichnet, daß** die Brücke nach Lösen wenigstens einer Schraube in ihrer Breite verstellbar ist.

7. Brille nach Anspruch 5 oder 6,
**dadurch gekennzeichnet, daß** an der Brücke und den Gläsern ein Nasensattel angebracht und insbesondere aufgerastet ist.
